# EUROPEAN PATENT SPECIFICATION

(11) **EP 1 826 925 B1**
(45) Date of publication and mention of the grant of the patent: **05.03.2014**
(21) Application number: 05818715.4
(22) Date of filing: 14.12.2005
(51) Int. Cl.: H04J 3/16

(54) **UNIFORM SCHEDULING SYSTEM OF SYNCHRONOUS OPTICAL NETWORK AND OPTICAL TRANSPORT NETWORK AND METHOD THEREOF**
GLEICHMÄSSIGE ABLAUFSTEUERUNG EINES SYNCHRONEN OPTISCHEN NETZWERKS UND EIN OPTISCHES TRANSPORTNETZ UND VERFAHREN DAFÜR
SYSTEME DE PROGRAMMATION UNIFORME DE RESEAU OPTIQUE SYNCHRONE ET DE RESEAU DE TRANSPORT OPTIQUE, ET PROCEDE

(30) Priority: 14.12.2004 CN 200410103304
(43) Date of publication of application: 29.08.2007
(73) Proprietor: Huawei Technologies Co., Ltd., Longgang District, Shenzhen Guangdong 518129 (CN)
(72) Inventor: LI, Xiaodong, Huawei Administration Building, Shenzhen, Guangdong 518129 (CN); ZOU, Shimin, Huawei Administration Building, Shenzhen, Guangdong 518129 (CN)
(74) Representative: Isarpatent
(86) International application number: PCT/CN2005/002184
(87) International publication number: WO 2006/063520

(56) References cited:
- WO-A1-02/063834
- WO-A1-03/073784
- US-B1- 6 587 470
- MCGUIRE A ET AL: "INTERWORKING BETWEEN SDH AND OTN-BASED TRANSPORT NETWORKS" BT TECHNOLOGY JOURNAL, SPRINGER, DORDRECHT, NL, vol. 19, no. 3, July 2001 (2001-07), pages 143-151, XP001096961 ISSN: 1358-3948
- "Network node interface for the synchronous digital hierarchy (SDH); G.707/Y.1322 (12/03)" ITU-T STANDARD IN FORCE (I), INTERNATIONAL TELECOMMUNICATION UNION, GENEVA,, CH, no. G707/Y1322 12/3, 14 December 2003 (2003-12-14), XP017400842

## Description

### Field of the Technology

The present invention relates to the technologies of signal switching in an optical communication network, and particularly, to the technology of signal switching in an optical communication network with an optical transport network.

### Background of the Invention

The technology of Optical Transport Hierarchy (OTH) is a new standard digital transport hierarchy developed after the Synchronous Digital Hierarchy (SDH)/Synchronous Optical Network (SONET). The Optical Transport Network (OTN) based on the OTH is a transparent transport technology developed to meet the demand of large capacity and large granularity switching at the level of the backbone network. The OTN with the digital encapsulation technology provides a new optical transport platform to an operator and a subscriber. The optical transport platform is safe and reliable, independent of subscribers, administrable, operable, effective, and has a lower. It is an inevitable trend of the development of a transport network that the core network evolves from the current transport network based on the SDH/SONET to a future transport network based on the OTN.

The Telecommunication Standardization Sector of the International Telecommunication Union (ITU-T) G.709 defines methods for mapping and Time Division Multiplexing (TDM) between various signals in the OTN.

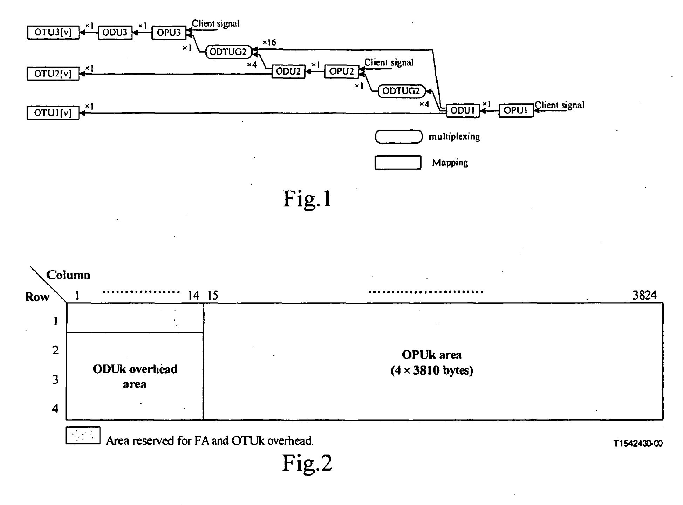

The mapping path is shown in Fig.1. There are three levels for each of signals of the Optical channel Payload Unit (OPUk), the Optical channel Data Unit (ODUk) and the Optical channel Transport Unit (OTUk), that is, k may be 1, 2 or 3. There may be multiple Client signals, such as a Synchronous Transfer Mode (STM) signal (STM-16, STM-64 or STM-256), an Internet Protocol (IP) signal, an Ethernet signal and an Asynchronous Transfer Mode (ATM) signal.

As shown in Fig.1, the paths of mapping and TDM include:
1. a client signal (e.g., STM-16) -> OPU1 -> ODU1 -> OTU1;
2. a client signal (e.g., STM-64) -> OPU2 -> ODU2 -> OTU2;
3. a client signal (e.g., STM-256) -> OPU3 -> ODU3 -> OTU3;
4. 4 × client signals (e.g., STM-16) -> 4 × OPU1 -> 4 × ODU1 -> Optical channel Data Tributary Unit Group 2 (ODTUG2) -> OPU2 -> ODU2 -> OTU2;
5. 16 × client signals (e.g., STM-16) -> 16 × OPU1 -> 16 × ODU1 -> ODTUG3 -> OPU3 -> ODU3 -> OTU3;
6. 4 × client signals (e.g., STM-64) -> 4 × OPU2 -> 4 × ODU2 -> ODTUG3 -> OPU3 -> ODU3 -> OTU3.

The OTN performs switching based on ODUk signals (k = 1, 2 and 3) respectively, and the cross-connection unit processes the signals separately to implement the switch and connection of ODUk signals (k = 1, 2 and 3).

The recommendation of ITU-T G.709 defines three levels of connection signals of the ODU and the OUT. According to the equation of the rate of ODUk (k = 1, 2 and 3) = 239/(239 - k) × "STM - N" and the equation of the rate of OTUk (k = 1, 2 and 3) = 255/(239 - k) × "STM - N", the rates of the signals may be calculated as follows:
ODU1: 239/238 × 2.48832 Gbps = 2.498775126 Gbps;
ODU2: 239/237 × 9.95328 Gbps = 10.037273924 Gbps;
ODU3: 239/236 × 39.81312 Gbps = 40.319218983 Gbps;
OTU1: 255/238 × 2.48832 Gbps = 2.66605714285714 Gbps;
OTU2: 255/237 × 9.95328 Gbps = 10.7092253164557 Gbps;
OTU3: 255/236 × 39.81312 Gbps = 43.018413559322 Gbps.

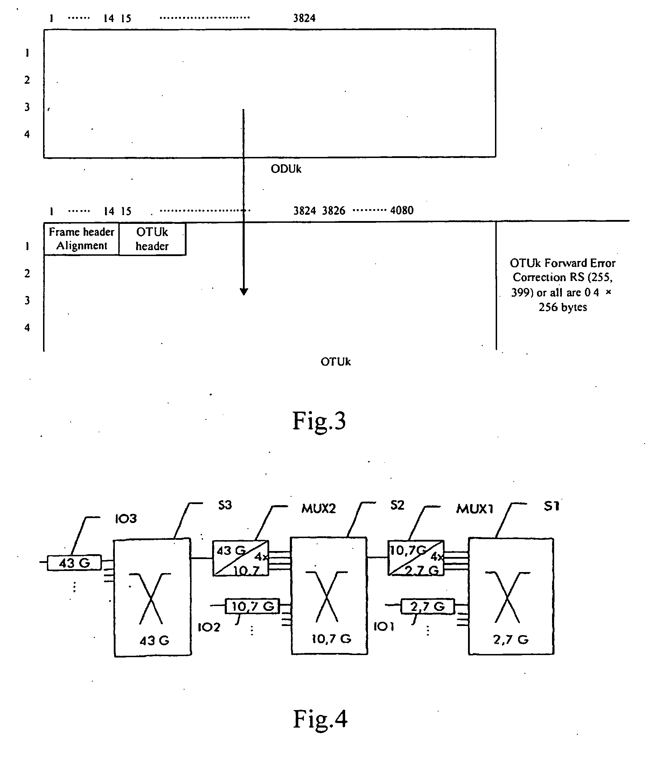

Fig.2 shows the frame structure of ODUk (k = 1, 2 and 3) according to the recommendation of the ITU-T G.709. In the first 14 columns, Line 1 is the area reserved for Frame Alignment (FA) and OTUk overhead (OH), and Lines 2 - 4 are the ODUk OH area. Columns 15 - 2824 are the OPUk area. Fig. 3 shows how to map the frame structure of ODUk to that of OTUk, where k = 1, 2 and 3. Compared with ODUk, the FA OH and the OTUk OH are added in Line 1 of Columns 1 - 14 in OTUk, and Columns 3825 - 4080 are added and filled with the Forward Error Correction (FEC) Reed-Solomon code of OTUk (OTUk FEC RS).

Periods of frames of the OTUk/ODUk/OPUk signals are shown in Table 1.

**Table 1**

| **Type of OTUk/ODUk/OPUk** | **Period** |
|---|---|
| **OTU1/ODU1/OPU1** | **48.971 µs** |
| **OTU2/ODU2/OPU2** | **12.191 µs** |
| **OTU3/ODU3/OPU3** | **3.035 µs** |

The "period" is an approximation with the precision of 3-digit decimal.

There are multiple conventional methods for switching the OTN signal. Fig.4 shows a first conventional method. As shown in Fig.4, the 43G/10.7G/2.7G signals, i.e., the three signals of different sending rates of the OUT are switched by three cross-connection matrixes, S1, S2 and S3. The three cross-connection matrixes are coupled by the time division multiplexing and demultiplexing units, i.e. by MUX1 and MUX2. Those skilled in the art can understand that the switching of equivalent ODU1/ODU2/ODU3 signals can be implemented according to the first conventional method.

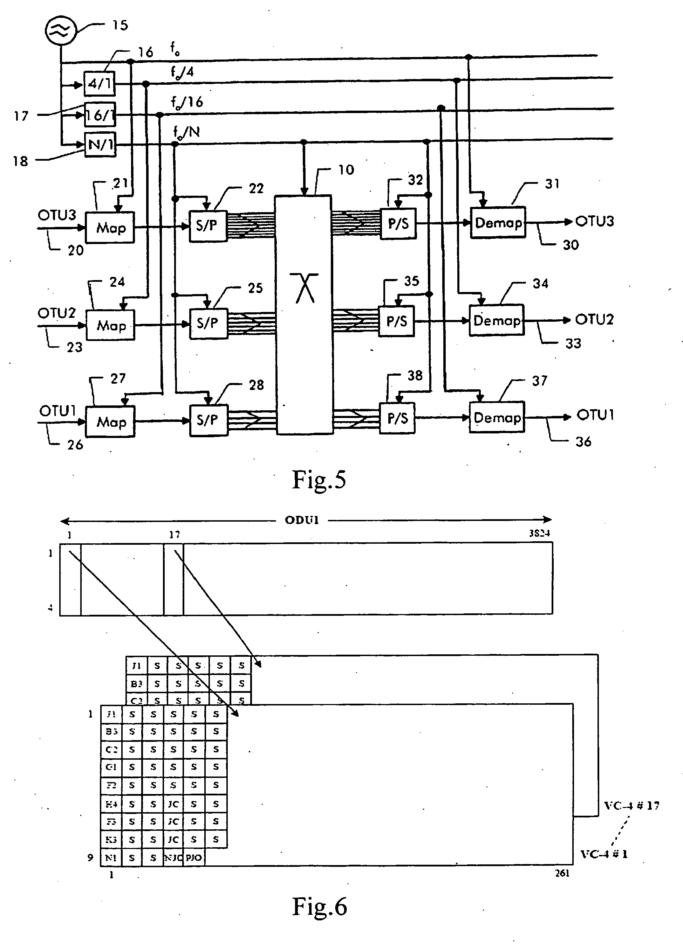

Fig.5 shows a second conventional method. As shown in Fig.5, the OTU1/OTU2/OTU3 signals are fixedly stuffed with a certain number of bytes and mapped to those of a higher rate in the Map units 21, 24 and 27 respectively. The higher rate is an integral multiple of SDH basic rate unit STM-1 (155.52 Mbps). Then the OTU1/OTU2/OTU3 signals are demultiplexed to the STM-1 level by the S/P units 22, 25 and 28 respectively, and are switched synchronously in the cross network chip 10. The OTU1/OTU2/OTU3 signals are made as the OTU1/OTU2/OTU3 signals of a higher rate by the P/S units 32, 35 and 38 respectively, and then are de-mapped to the OTU1/OTU2 /OTU3 signals after fixedly stuffed in the Demap units 31, 34 and 37 respectively. Those skilled in the art can understand that the switching of equivalent OTU1/OTU2/OTU3 signals can be implemented according to the second conventional method.

In the second conventional method above, the system includes a cross-connection unit based on the STM-1 granularity, and there are multiple synchronous multiplexing and demultiplexing units around the synchronous cross matrix. The OTU1/OTU2/OTU3 signals have a higher rate after fixedly stuffed with a certain number of bytes, which may guarantee the transparency of the client data transmission of the OTU1/OTU2/OTU3 signals. The number of timeslots contained in the signals of various levels is given as follows (1 timeslot = 155.52 Mbps):
STM-1: 1 timeslot;
STM-4: 4 timeslots;
STM-16: 16 timeslots;
STM-64: 64 timeslots;
OTU1: 18 timeslots;
OTU2: 72 timeslots;
OTU3: 288 timeslots.

The stuffing rates of the OTU1/OTU2/OTU3 are given as follows:
18 timeslots = 18 × 155.52 Mbps = 2,799.36 Mbps > OTU1;
72 timeslots = 72 × 155.52 Mbps = 11,197.44 Mbps > OTU2;
288 timeslots = 288 × 155.52 Mbps = 44,789.76 Mbps > OTU3.

In a third conventional method, an OTN unit are mapped into the layer of SDH high order channel using the "optical Modulator-Demodulator (MODEM)" function, i.e. a signal in the layer of SDH STM-N regeneration section is mapped into the layer of SDH VC4 channel based on the principle of virtual concatenation of Virtual Container 4 (VC4) to implement the "optical MODEM" function. There is a definition of mapping an OTN unit into the VC4 in the five-level transport frame interface bus standard (TFI-5) defined by the Optical Internetworking Forum (OIF) organization.

**Table 2**

| **Client signal** | **Planned bit rate (Mbps)** | **The number of STS-3c/VC-4** | **The number of fixedly stuffed bytes per STS-3c/VC-4** | **Mapping efficiency** |
|---|---|---|---|---|
| **ODU1** | **2498.775126** | **17** | **43±1** | **98.16%** |
| **OTU1** | **2666.057143** | **18** | **25±1** | **98.90%** |
| **ODU2** | **10037.273924** | **68** | **33±1** | **98.56%** |
| **OTU2** | **10709.225316** | **72** | **16±1** | **99.32%** |
| **ODU3** | **40319.218983** | **270** | **7±1** | **99.71%** |
| **OTU3** | **43018.413559** | **288** | **6±1** | **99.4%** |

Table 2 shows types of OTN units, the mapping number, and the mapping efficiency.

The method for mapping the ODU 1 into 17 VC4s are shown in Fig.6.

For the sake of adaptation to the clock rate of the VC4, a fixedly stuffed byte (S), an adjustment and control byte (JC) and adjustment occasion bytes (NJO and PJO) are introduced. The description of these bytes is given in Table 3.

**Table 3**

| **JC[7:0]** | **NJO** | **PJO** |
|---|---|---|
| **00** | **Check byte** | **Data byte** |
| **10** | **Data byte** | **Data byte** |
| **10** | **Not generated** | |
| **11** | **Check byte** | **Check byte** |

In practical applications, the inventor finds that, by the conventional methods above, the OTN signal is not switched well, the signals in the SDH and the OTN are not uniformly switched well either. In the first conventional method, equivalent ODU2/ODU3 serial signals cannot be switched, the switching path and the cross design are complex, and neither the lossless switch of main/backup cross units nor the uniform switching of SDH signals and OTN signals can be implemented. In the second conventional method, the switching of the ODU1/ODU2/ODU3, the mapping and time division multiplexing of signals of various layers in the OTN cannot be implemented, and there may be hit to service in the uniform switching. In the third conventional method, a large buffer space is needed and the third conventional method is difficult to be realized technically, furthermore, the utilization of the bus may become very low.

With respect to the first conventional method, the switching of equivalent ODU2/ODU3 serial signals cannot be implemented because the asynchronous cross chip technology is not mature yet and the industry cannot provide a large capacity asynchronous electrical cross network chip at the 43 Gbps/10.7 Gbps granularity level. Moreover, the switching path is complex because of the coupling relations between the matrixes of various levels, and the cross design is complex because of the three-level asynchronous cross matrixes. There is loss when the main/backup cross units are switched because the asynchronous cross mode is adopted. Moreover, the uniform switching of SDH signals and OTN signals cannot be implemented by the first conventional method, only OTN signals can be switched by the first conventional method.

With respect to the second conventional method, the switching is performed based on the transport units of OTU1/OTU2/OTU3, the most reasonable switching of the ODU is not implemented, i.e., the switching of ODU1/ODU2/ODU3 cannot be implemented. Meanwhile, only the switching of OTN signals is implemented, but no mapping and time division multiplexing of signals of various layers in an OTN are implemented. An SDH overhead will be regenerated when the uniform switching of STM-1 or VC4 is carried out for the OTN signals and the SDH signals, as a result, part of the OTN signals is changed and the hit to service is brought about.

With respect to the third conventional method, there is no frame header indication in the mapping format, and the default frame header of the ODU is the start position of the VC4. Thus the ODU signal should be synchronized with the frame header signal of the VC4, and a large buffer is needed to store the ODU so as to map the ODU signal into the VC4 from the frame header signal step by step when the frame header signal of the SDH arrives. Because the frame header of the ODU signal is not consistent with that of the SDH signal, the frame header of the ODU signal is required to wait for the frame header of the SDH signal, thus a delay less than the time of transferring one frame is brought about to the ODU signal, and the feature of short delay of the OTN network cannot be realized. In the case that the STM-16 bus format of TFI-5 is adopted, 17 STM-1s are needed to transport the ODU1, and thus the utilization of the bus is lower when the bus of the service slot of the device is unchangeable.

"Interworking between SDH and OTN-based transport networks", by Mcguire A et al (TECHNOLOGY JOURNAL, SPRINGER, DORDRECHT, NL, vol. 19, no.3, July 2001, pages 143-151, XP001096961, ISSN:1358-3948), discloses a method for transporting OTN entities on SDH networks by using virtual concatenation.

G.707/Y.1322 (12/2003) defines an ODU-over-SDH mapping functionality in which ODUk is mapped into VC-4-Xv using virtual concatenation.

US 6 587 470 B1 discloses a flexible cross-connect with a data plane which allows the establishment of connections between network interfaces at any network interface card to another network interface on any other network interface card.

### Summary of the Invention

According to the present invention, the main objective of the present invention is to provide a method and a system for switching an Optical Transport Network (OTN) signal using a Synchronous Digital Hierarchy (SDH) to implement switching the OTN signal in the SDH.

A method for switching an Optical Transport Network (OTN) signal using a Synchronous Digital Hierarchy (SDH) includes
mapping, by a switching system, an OTN signal received from a first OTN interface into at least one synchronous transfer mode -17, STM-17, bus based on a system clock signal and a frame header indication signal provided by a system clock unit to generate at least one STM-17bus signal;
cross-connecting the at least one STM-17 bus signal at a uniform level of an STM rate; and
de-mapping, by the switching system, the at least one cross-connected STM-17 bus signal to the OTN signal and sending the OTN signal through a second OTN interface;
wherein the STM-17 bus includes 9 rows and 4590 columns, the bus rate of the STM-17 bus is 2.6435 Gbps.

When the OTN signal received is an Optical channel Transport Unit (OTU) signal, the mapping the OTN signal received into the at least one STM-17 bus includes: de-mapping the OTU signal received to an Optical channel Data Unit (ODU) signal, and mapping the ODU signal into the at least one STM-17 bus asynchronously based on the system clock signal and the frame header indication signal; and
the de-mapping the at least one cross-connected STM-17 bus signal to the OTN signal and sending the OTN signal includes: de-mapping the at least one cross-connected STM-17 bus signal to the ODU signal based on the system clock signal and the frame header indication signal, and mapping the ODU signal into the OTU signal and sending the OTU signal.

Preferably, the mapping the ODU signal into the at least one STM-17 bus based on the system clock signal and the frame header indication signal includes:
mapping the ODU signal into Virtual Containers (VC) of the at least one STM-17, and adding, to a fixed position of each VC, a pointer pointing to the start position of the ODU signal and positive/negative adjustment bytes for adjusting the difference between a circuit clock of the ODU signal and a system clock.

Preferably, the OTN signal is an Optical channel Transport Unit (OTU) signal, and the mapping the OTN signal received into the at least one STM-17 bus includes:
de-mapping the OTU signal received into an SDH signal, and adapting the SDH signal into the at least one STM-17 bus based on a system clock signal and a frame header indication signal; and
the de-mapping the at least one cross-connected STM-17 bus signal to the OTN signal and sending the OTN signal includes:
   restoring the at least one cross-connected STM-17 bus signal to the SDH signal based on the system clock, signal, mapping the SDH signal into the OTU signal and sending the OTU signal.

Preferably, the uniform level of an STM rate is STM-1 level or VC-4 level, and the cross-connecting includes:demultiplexing the STM-17 bus signal to 17 STM-1 signals or 17 VC-4 signals, and cross-connecting the STM-1 signals or VC-4 signals acquired by mapping one OTN signal together as a minimum unit to be switched.

Preferably, mapping an OTN signal received into at least one STM-17 bus may include at least one of:
mapping an ODU1 signal into 1 STM-17 bus;
mapping an ODU2 signal into 4 STM-17 buses; and
mapping an ODU3 signal into 16 STM-17 buses.

Preferably, the method further includes:
adapting an SDH signal received from a first SDH interface into an STM-17 bus based on a system clock signal and a frame header indication signal to generate an STM-17 bus signal after synchronizing the SDH signal received with a system clock and a frame header;
cross-connecting the STM-17 bus signal at a uniform level of an STM rate; and
restoring the cross-connected STM-17 bus signal to the SDH signal based on the system clock signal and the frame header indication signal, and sending the SDH signal through a second SDH interface.

A system for switching an Optical Transport Network (OTN) signal using a Synchronous Digital Hierarchy (SDH) includes:
a system clock unit for providing a system clock signal and a frame header indication signal;
a cross-connection unit for cross-connecting a signal at a uniform level of a synchronous transfer mode rate; and
an OTN signal interface processing unit for mapping an OTN signal received from a circuit side into at least one STM-17 bus based on the system clock signal and the frame header indication signal to generate at least one STM-17 bus signal, and sending the at least one STM-17 bus signal to the cross-connection unit; de-mapping a signal output by the cross-connection unit through at least one second STM-17 bus to the OTN signal and sending the OTN signal to the circuit side
wherein the STM-17 bus includes 9 rows and 4590 columns, the bus rate of the STM-17 bus is 2.6435 Gbps.

Preferably, the system further includes: an SDH signal interface processing unit for
synchronizing based on the system clock signal and the frame header indication signal provided by a system clock unit, an SDH signal received from the circuit side with a system clock and a frame header,
adapting the synchronized SDH signal into at least one third STM-17 bus to generate at least one second STM-17 bus signal;
sending the at least one second STM-17 bus signal to the cross-connection unit, and
restoring a signal output by the cross-connection unit through at least one fourth STM-17 bus to the SDH signal and sending the SDH signal to the circuit side.

Preferably, the SDH signal interface processing unit includes:
an SDH signal processing module, for synchronizing the SDH signal received from the circuit side with the system clock and performing conversion between a signal of a standard five-level transport frame interface bus and the SDH signal received from the circuit side; and
a bus adaptation module, connected to the SDH signal processing module through the standard five-level transport frame interface bus, for performing the adaptation between the standard five-level transport frame interface bus and the synchronous transfer mode bus.

Preferably, the OTN signal interface processing unit includes:
an OTN signal processing module, for performing conversion between an Optical channel Transport Unit (OTU) signal and an Optical channel Data Unit (ODU) signal; and
an ODU mapping and bus adaptation module connected with the OTN signal processing module through a standard five-level transport frame interface bus, for mapping the ODU signal received from the OTN signal processing module to the at least one STM-17 bus signal by clock synchronization and frame synchronization alignment; de-mapping the signal through the at least one second STM-17 bus into the ODU signal and sending the ODU signal to the OTN signal processing unit.

Preferably, the OTN signal interface processing unit includes:
an OTN signal processing module, for performing conversion between an OTU signal and an SDH signal; and
an ODU mapping and bus adaptation module, connected with the OTN signal processing module through a standard five-level transport frame interface bus, for adapting an SDH signal received from the OTN signal processing module to the at least one STM-17 bus signal, or converting the signal through the at least one second STM-17 bus into the SDH signal and sending the SDH signal to the OTN signal processing module.

Preferably, the ODU mapping and bus adaptation module is further configured for mapping the ODU signal into a Virtual Container 4 of the SDH asynchronously, the Virtual Container 4 containing an ODU pointer in a fixed position pointing to the start position of the ODU signal and positive/negative adjustment bytes for adjusting the difference between a circuit clock of the ODU signal and a system clock.

Preferably, a minimum unit to be switched is a signal of a Virtual Container level when the cross-connection unit processes traffic of the SDH signal interface processing unit; and the cross-connection unit cross-connects an ODU service together when processing a service of the OTN signal interface processing unit.

Preferably, the cross-connection unit is further configured for monitoring the at least one STM-17 signal and implementing overhead regeneration.

Preferably, the cross-connection unit switches to a backup cross-connection unit at an overhead position of the synchronous transfer mode bus.

Preferably, the OTN signal interface processing unit is operable for at least one of:
mapping an ODU 1 signal into 1 STM-17 bus;
mapping an ODU2 signal into 4 STM-17 buses; and
mapping an ODU3 signal into 16 STM-17 buses.

An OTN signal interface processing unit includes:
a component for mapping, based on a system clock signal and a frame header indication signal provided by a system clock unit, an OTN signal received from a circuit side into at least one STM-17 bus to be sent to the cross-connection unit; and
a component for de-mapping at least one STM-17 bus signal to the OTN signal and sending the OTN signal to the circuit side;
wherein the STM-17 bus includes 9 rows and 4590 columns, the bus rate of the STM-17 bus is 2.6435 Gbps.

A SDH signal interface processing unit includes:
a component for synchronizing, based on a system clock signal and a frame header indication signal, an SDH signal received from a circuit side with a system clock and a frame header,
a component for adapting the synchronized SDH signal into at least one STM-17 bus to generate at least one STM-17 bus signal and sending the at least one STM-17 bus signal; and
a component for restoring the at least one STM-17 bus signal to the SDH signal and sending the SDH signal to the circuit side;
wherein the STM-17 bus includes 9 rows and 4590 columns, the bus rate of the STM-17 bus is 2.6435 Gbps.

As can be seen from the embodiments, the difference between the technical solutions of the present invention and those of the prior art is that in the OTN switching system, after an OTN signal is mapped asynchronously into an STM-17 bus with a frame synchronization byte and an error code monitoring byte, and after an SDH signal is mapped into the same STM-17 bus, the STM-17 bus is connected to the cross-connection unit through a uniform frame header indication signal and the cross-connection unit performs uniform switching. An ODU pointer and an adjustment position are introduced at a fixed position in the VC4 when the OTN signal is mapped.

Compared with the prior art, the technical solutions of the present invention are simpler and easier to be implemented because the system design and the cross design according to the embodiments of the present invention are simpler.

Because the STM-17 bus is connected to the cross-connecting unit through the uniform frame header indication signal, the time for switching between the main/backup units may be at the overhead position of the STM-17 bus, thus hit to service is avoided and the performance of the switching is improved greatly. Moreover, as the asynchronous mapping is used for the OTN signal, and specifically, the ODU pointer and the adjustment position are introduced at a fixed position in the VC4 when the OTN signal is mapped, the system may directly map an OTN signal without large buffer space, which decreases the requirements for the system performance and thus reduces the system cost.

In the embodiment of the present invention, the interworking between an SDH and an OTN may be implemented because the uniform switching is performed after an SDH signal and an OTN signal are mapped into the STM-17 bus uniformly, thus it is easier to upgrade the SDH to the OTN smoothly and expand the services.

The bus may be monitored to avoid an error and thus improve the reliability of the system greatly because the STM-17 bus has frame synchronization bytes and error code monitoring bytes.

### Brief Description of the Drawings

Fig.1 shows a schematic diagram of the paths of mapping and TDM between various signals of an OTN defined in the ITU-T G.709.
Fig.2 shows a schematic diagram of the frame structure of an ODU of various levels defined in the ITU-T G.709.
Fig.3 shows a schematic diagram of the frame structure of an OTU of various levels defined in the ITU-T G.709.
Fig.4 shows a schematic diagram of the structure of the system for switching an OTN signal in accordance with a first conventional method.
Fig.5 shows a schematic diagram of the structure of the system for switching an OTN signal in accordance with a second conventional method.
Fig.6 shows a schematic diagram illustrating how to map the ODU1 into the VC4 in accordance with a third conventional method.
Fig.7 shows a schematic diagram of the structure of the SDH and OTN switching system in accordance with an embodiment of the present invention.
Fig.8 shows a schematic diagram of the frame structure of the STM-17 bus in the SDH and OTN switching system in accordance with an embodiment of the present invention.
Fig.9 shows a schematic diagram illustrating how to map the ODU1 into the VC4 in the SDH and OTN switching system in accordance with an embodiment of the present invention.
Fig.10 shows a flowchart of the SDH and OTN switching method in accordance with an embodiment of the present invention.

### Embodiments of the Invention

In the present invention, the SDH signal is synchronized with the system clock and adapted into the synchronous transfer mode bus, such as an STM-17 bus. And the OTN signal is mapped into the STM-17 bus asynchronously based on a certain rule. The cross-connection of the signal of the STM-17 bus is performed at a uniform rate level of the synchronous transfer mode, such as the STM-1 or the VC4, so as to implement the interworking between the SDH and the OTN. Moreover, the technical solutions of the present invention may also be applied directly to a pure OTN, no SDH signal is processed and only the OTN signal is mapped into the STM-17 bus to be switched.

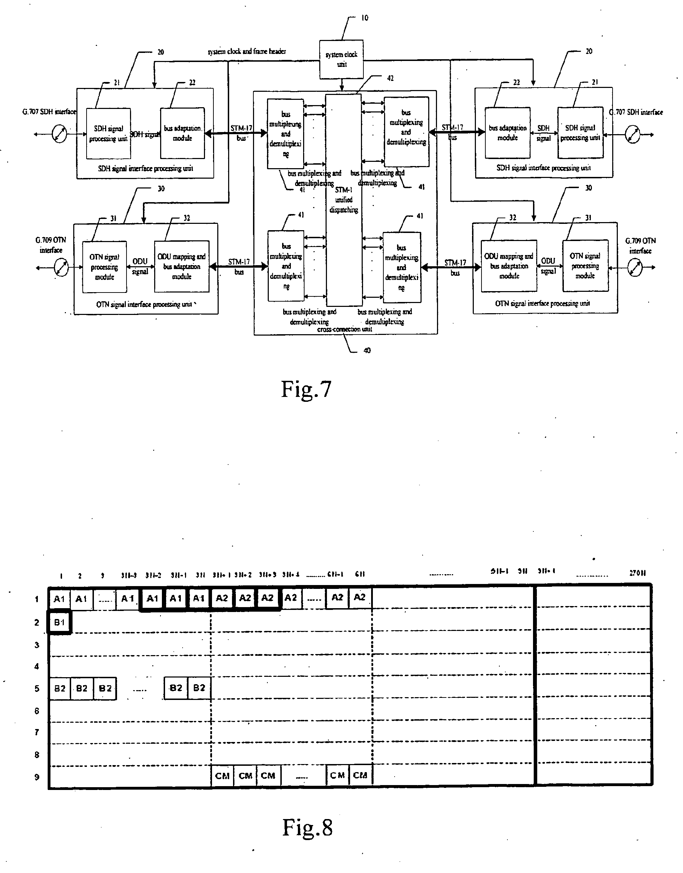

Fig.7 shows a schematic diagram of the structure of the OTN switching system in accordance with an embodiment of the present invention.

As shown in Fig.7, the OTN switching system includes: system clock unit 10, SDH signal interface processing unit 20, OTN signal interface processing unit 30 and cross-connection unit 40. The system clock unit 10 is connected to all the other units in the OTN switching system respectively. The SDH signal interface processing unit 20 is connected to an SDH network through an SDH interface defined in G.707 and is connected to the cross-connection unit 40 through an STM-17 bus. The OTN signal interface processing unit 30 is connected to an OTN network through an OTN interface defined in G.707 and is connected to the cross-connection unit 40 through an STM-17 bus.

Fig.8 shows a schematic diagram of the frame structure of an STM-17 bus. As shown in Fig.8, for STM-N, N is equal to 17 in this embodiment, there are 9 rows and 4590 columns in total, and the bus rate is 2.6435 Gbps. Those skilled in the art can understand that the frame structure of the STM-17 bus used in the embodiment of the present invention is similar to the frame structure of an STM-16 bus in G.707, except that there is one more STM-1 in the frame structure of the STM-17 bus, and in the frame structure of the STM-17 bus, A1 and A2 are used as frame header indication in a section overhead, B1 is used to monitor the error code of an regeneration section, and B2 is used to monitor the error code of a multiplexing section.

The functions and implementation of the units in the system are described below.

Particularly, the system clock unit 10 provides a frame header indication signal and a system clock signal that meets the demand of the SDH clock for each of the other units in the OTN switching system. The system clock signal may be 38 MHz or 155 MHz.

The SDH signal interface processing unit 20 synchronizes an SDH signal received through the SDH interface with the system clock, and adapts the SDH signal to the STM-17 bus. In the contrary direction, the SDH signal interface processing unit 20 converts a signal received from the STM-17 bus to the SDH signal. The SDH signal interface processing unit 20 includes SDH signal processing module 21 and bus adaptation module 22 which are connected to each other with a standard TFI-5 bus (STM-16/2.488 Gbps).

The SDH signal processing module 21 performs the interaction of the SDH signal through the SDH interface defined in G.707 so as to process the overhead and pointer of the SDH signal, synchronizes the SDH signal of the circuit side with the system clock and the system frame header. The SDH signal processing module 21 also performs the conversion between the standard TFI-5 bus (STM-16/2.488 Gbps) signal and the SDH signal of the circuit side. The bus adaptation module 22 performs the adaptation between the TFI-5 bus and the STM-17 bus. Preferably, the bus adaptation module 22 inserts a fixedly stuffed STM-1 into the SDH signal received through the TFI-5 bus with the byte interleaved mode, regenerates A1/A2, B1/B2, and implements the adaptation of the STM-17 bus with the cross-connection unit 40. In the contrary direction, the bus adaptation module 22 removes the fixedly stuffed STM-1 from a signal received through the STM-17 bus to convert the signal to the SDH signal.

Practically, the SDH signal processing module 21 and the bus adaptation module 22 may be integrated into one chip.

The OTN signal interface processing unit 30 performs such functions in the OTN layer as overhead processing and error code correction, maps an OTN signal into the STM-17 bus. In the contrary direction, the OTN signal interface processing unit 30 de-maps and converts an STM-17 bus signal to the OTN signal. The OTN signal interface processing unit 30 may include OTN signal processing module 31 and ODU mapping and bus adaptation module 32.

If the OTN switching system need not perform the interworking between the SDH and the OTN, the mapping process performed by the OTN signal interface processing unit 30 includes: de-mapping the OTN signal, i.e. OTUk signal, to the ODUk signal, and mapping the ODUk signal into the STM-17 bus asynchronously based on the system clock signal and the frame header indication signal. In the contrary direction, the OTN signal interface processing unit 30 de-maps an STM-17 bus signal to the ODUk signal asynchronously based on the system clock signal and the frame header indication signal, and maps the ODUk signal into OTUk signal.

The OTN signal processing module 31 and the ODU mapping and bus adaptation module 32 communicates with each other through the ODUk signal. The OTN signal processing module 31 performs such functions in the OTN layer as overhead processing and error code correction, and de-maps the OTN signal, i.e. OTUk signal, to the ODUk signal. The ODU mapping and bus adaptation module 32 maps the ODUk signal into the VC4 of STM-17 asynchronously. In order to guarantee rate matching and random mapping of the ODUk signal, an ODU pointer and an adjustment position are introduced at a fixed position in the VC4, which is similar to the AU pointer in the SDH.

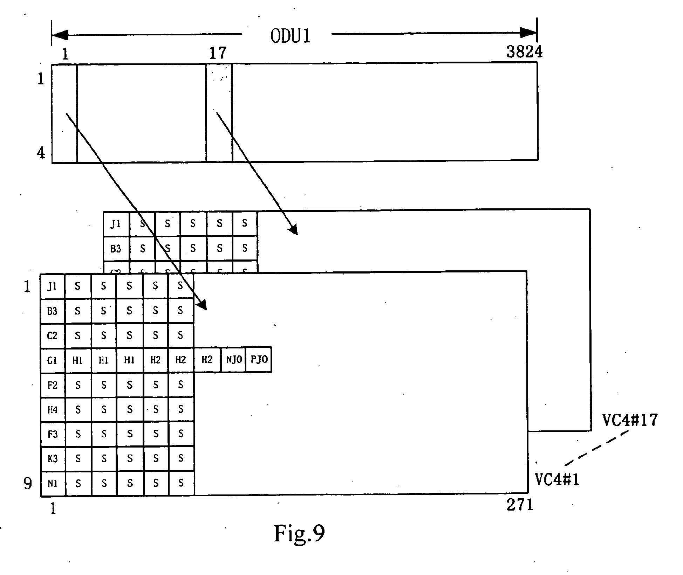

Fig.9 shows a schematic diagram illustrating how to map the ODU1 into the VC4 in the SDH and OTN switching system in accordance with an embodiment of the present invention. As shown in Fig.9, H1/H2 is set as the pointer of the ODU1 to indicate the start position of the ODU1 in the VC4, and thus mapping of the ODU1 into the VC4 without delay may be achieved. PJC and NJC are set as positive and negative adjustment bytes respectively so as to adapt the difference between the circuit clock of the ODU1 and the system clock. Those skilled in the art can understand that each byte of the H1/H2 of the ODU1 means similarly to the H1/H2 of the AU pointer in the SDH, and the NJO and PJO means similarly to the H3 of the AU pointer in the SDH and subsequent bytes of the H3. When de-mapping an STM-17 bus signal to the ODUk, the fixedly stuffed STM-1 and the pointer are removed from the STM-17 bus signal, the circuit clock is obtained through the positive/negative pointer adjustment, and the ODUk is obtained through the circuit clock. It should be noted that the methods of the mapping and de-mapping between the ODU2/ODU3 and the VC4 are the same as that of the ODU1.

In the embodiment, the number of the buses and VC4s occupied by ODUk is shown in Table 4.

**Table 4**

| **Signal to be mapped** | **Normal bit rate (Mb/Sec)** | **The number of VC4s needed** | **The number of the STM-17 buses occupied** |
|---|---|---|---|
| **ODU1** | **2498.775126** | **17** | **1** |
| **ODU2** | **10037.273924** | **68** | **4** |
| **ODU3** | **40319.218983** | **272** | **16** |

If the OTN switching system needs perform the interworking between the SDH and the OTN, the mapping process performed by the OTN signal interface processing unit 30 includes: de-mapping the OTN signal, the OTUk signal, to the SDH signal and adapting the SDH signal into the STM-17 bus; in the contrary direction, converting the STM-17 bus signal to the SDH signal and mapping the SDH signal into the OTUk signal.

The OTN signal processing module 31 and the ODU mapping and bus adaptation module 32 are connected to each other through a standard SDH TFI-5 bus. In practical applications, the OTN signal processing module 31 implements such functions in the OTN layer as overhead processing and error code correction, and converts the OTUk signal into the SDH signal. The ODU mapping and bus adaptation module 32 directly adapts the SDH signal into the STM-17 bus; and in the contrary direction, the ODU mapping and bus adaptation module 32 restores the STM-17 bus signal to the SDH signal. Those skilled in the art are familiar with the processes above performed by the ODU mapping and bus adaptation module 32, thus there is no more description. By far, the service interworking may be performed between the cross-connection unit 40 and the SDH signal interface processing unit 20 so as to implement the interworking between the SDH network and the OTN.

In practice, the OTN signal processing module 31 and the ODU mapping and bus adaptation module 32 may be integrated into one chip.

The cross-connection unit 40 de-multiplexes an STM-17 bus signal to 17 STM-1s based on the frame structure of the STM-1, switches the STM-1s (or VC4s) uniformly, and multiplexes the STM-1s to an STM-17 bus signal and outputs the STM-17 bus signal. Preferably, the cross-connection unit 40 may further monitor an STM-17 bus, for example, monitor the Out of Frame alert and B1/B2 error code, thus the overhead regeneration is realized and a peer service processing module can also monitor the signal output. It should be noted that, when the cross-connection unit 40 processes a traffic of the SDH signal interface processing unit 20, the minimum unit to be switched is STM-1 or VC4; when the cross-connection unit 40 processes a service of the OTN signal interface processing unit 30, the minimum unit to be switched for the ODU1 is 17 × STM-1 or 17 × VC4, for the ODU2 is 68 × STM-1 or 68 × VC4, for the ODU3 is 272 × STM-1 or 272 × VC4, that is, the ODUk service is cross-connected together.

The cross-connection unit 40 includes bus multiplexing and demultiplexing module 41 and STM-1 uniform switching module 42. The bus multiplexing and demultiplexing module 41 demultiplexes a signal received through the STM-17 bus to 17 STM-1s and sends the STM-1s to the STM-1 uniform switching module 42. In the contrary direction, the bus multiplexing and demultiplexing module 41 multiplexes STM-1s received from the STM-1 uniform switching module 42 into an STM-17 bus signal to be sent. The STM-1 uniform switching module 42 performs the switching with the minimum switching unit STM-1.

Those skilled in the art can understand that because the SDH signal interface processing unit 20 and the OTN signal interface processing unit 30 use a uniform frame header indication signal to send a service bus signal to the cross-connection unit 40, that is, the start positions of the STM-17 bus signals are substantially the same, a damage-free service switch may be achieved if the time for switch is at the overhead position of the STM-17 when the cross-connection unit 40 is switched to backup cross-connection unit 40.

Those skilled in the art should know that the system structure above is only an example, and any change or substitution based on the present invention should also be covered by the protection scope of the present invention. For example, when the OTN switching system is applied in a pure OTN, there may be no SDH signal interface processing unit 20 and only the OTN signal is mapped into the STM-17 bus to be switched.

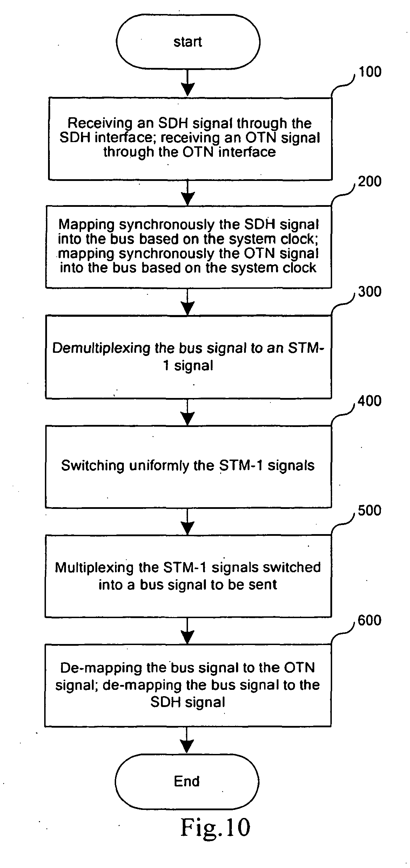

Based on the system shown in Fig.7, Fig. 10 shows a flowchart of the SDH and OTN switching method in accordance with an embodiment of the present invention. The process is described below.

In Step 100, the SDH signal interface processing unit 20 receives an SDH signal through the SDH interface; the OTN signal interface processing unit 30 receives an OTN signal through the OTN interface.

In Step 200, the SDH signal interface processing unit 20 maps the SDH signal into the STM-17 bus based on the system clock signal and the frame header indication signal provided by the system clock unit 10. Specifically, in response to processing the overhead and pointer of the SDH, the SDH signal interface processing unit 20 synchronizes the SDH signal of the circuit side with the system clock and the frame header based on the system clock signal and the frame header indication signal, adapts the SDH signal into the standard TFI-5 bus (STM-16/2.488 Gbps), inserts a fixedly stuffed STM1 into the TFI-5 bus signal with the byte interleaved mode, regenerates A1/A2 and B1/B2. Thus the adaptation between the TFI-5 bus and the STM-17 bus is implemented, and the SDH signal is mapped into the STM-17 bus synchronously.

The OTN signal interface processing unit 30 maps the OTN signal into the bus synchronously based on the system clock signal and the frame header indication signal provided by the system clock unit 10. Specifically, the OTN signal interface processing unit 30 first implements such functions in the OTN layer as the overhead processing and error code correction. When the OTN and the SDH are switched respectively, the OTN signal interface processing unit 30 de-maps the OTUk signal of the circuit side to ODUk signal, maps the ODUk signal into the VC4 in the STM-17 bus asynchronously based on the system clock signal and the frame header indication signal, and adds, to a fixed position of the Virtual Container, a pointer pointing to the start position of ODUk signal and positive/negative adjustment bytes for adjusting the difference between the circuit clock of ODUk signal and the system clock. When the OTN and the SDH are switched uniformly, the OTN signal interface processing unit 30 de-maps the OTUk signal to an SDH signal, adapts the SDH signal into the TFI-5 bus, and adapts the SDH signal in the TFI-5 bus into the STM-17 bus. It should be noted that the VC4 includes the pointer with a fixed position pointing to the start position of ODUk signal, and positive/negative adjustment bytes for adjusting the difference between the circuit clock of ODUk signal and the system clock.

In Step 300, the cross-connection 40 demultiplexes the STM-17 bus signal to STM-1 signals. Specifically, each STM-17 bus signal is demultiplexed to 17 STM-1 signals.

In Step 400, the cross-connection unit 40 switches the STM-1 or VC4 signals uniformly. Specifically, when processing a service of the SDH signal interface processing unit 20, the cross-connection unit 40 performs the cross-connection at the level of STM-1 or VC4; when processing a service of the OTN signal interface processing unit 30, the cross-connection unit 40 cross-connects the ODUk signal together at the level of STM-1 or VC4, that is, cross-connects the STM-1 signals as a whole together acquired by mapping one OTN signal.

In Step 500, the cross-connection unit 40 multiplexes the STM-1 signals, after switched, to an STM-17 bus signal to be sent. The processing in this step is the reverse processing of Step 300 and there is no more description.

In Step 600, the OTN signal interface processing unit 30 demultiplexes the STM-17 bus signal to the OTN signal and sends the OTN signal through the OTN interface. The processing in this step is the reverse processing of Steps 200 and 100 and there is no more description.

The SDH signal interface processing unit 20 de-maps the STM-17 bus signal to an SDH signal and sends the SDH signal through the SDH interface. The processing in this step is the reverse processing of Steps 200 and 100 and will not be described herein.

The foregoing are only preferred embodiments of the present invention and are not for use in limiting the protection scope thereof. All the modifications, equivalent replacements or improvements in the scope of the present invention shall be included in the protection scope of the present invention.

## Claims

1. A method for switching an Optical Transport Network (OTN) signal using a Synchronous Digital Hierarchy (SDH), **characterized by** comprising:
mapping, by a switching system, an OTN signal received from a first OTN interface into at least one synchronous transfer mode -17, STM-17, bus based on a system clock signal and a frame header indication signal provided by a system clock unit (10) to generate at least one STM-17 bus signal (200);
cross-connecting the at least one STM-17 bus signal at a uniform level of an STM rate (400); and
de-mapping, by the switching system, the at least one cross-connected STM-17 bus signal to the OTN signal and sending the OTN signal through a second OTN interface (600);
wherein the STM-17 bus includes 9 rows and 4590 columns, the bus rate of the STM-17 bus is 2.6435 Gbps.

2. The method of Claim 1, wherein the OTN signal received is an Optical channel Transport Unit (OTU) signal; and
the mapping the OTN signal received into the at least one STM-17 bus comprises:
de-mapping the OTU signal received to an Optical channel Data Unit (ODU) signal, and mapping the ODU signal into the at least one STM-17 bus asynchronously based on the system clock signal and the frame header indication signal;
the de-mapping the at least one cross-connected STM-17 bus signal to the OTN signal and sending the OTN signal comprises:
de-mapping the at least one cross-connected STM-17 bus signal to the ODU signal based on the system clock signal and the frame header indication signal, and mapping the ODU signal into the OTU signal and sending the OTU signal.

3. The method of Claim 2, wherein the mapping the ODU signal into the at least one STM-17 bus based on the system clock signal and the frame header indication signal comprises:
mapping the ODU signal into Virtual Containers (VC) of the at least one STM-17, and adding, to a fixed position of each VC, a pointer pointing to the start position of the ODU signal and positive/negative adjustment bytes for adjusting the difference between a circuit clock of the ODU signal and the system clock.

4. The method of Claim 1, wherein the OTN signal is an Optical channel Transport Unit (OTU) signal; and
the mapping the OTN signal received into the at least one STM-17 bus comprises:
de-mapping the OTU signal received into an SDH signal, and adapting the SDH signal into the at least one STM-17 bus based on the system clock signal and the frame header indication signal; and
the de-mapping the at least one cross-connected STM-17 bus signal to the OTN signal and sending the OTN signal comprises:
restoring the at least one cross-connected STM-17 bus signal to the SDH signal based on the system clock signal, mapping the SDH signal into the OTU signal and sending the OTU signal.

5. The method of any of Claims 1 to 4, wherein the uniform level of an STM rate is STM-1 level or VC-4 level, and the cross-connecting comprises: demultiplexing the STM-17 bus signal to 17 STM-1 signals or 17 VC-4 signals, and cross-connecting the STM-1 signals or VC-4 signals acquired by mapping one OTN signal together as a minimum unit to be switched.

6. The method of any of Claims 1-4, wherein mapping an OTN signal received into at least one STM-17 bus comprises at least one of:
mapping an ODU1 signal into 1 STM-17 bus;
mapping an ODU2 signal into 4 STM-17 buses; and
mapping an ODU3 signal into 16 STM-17 buses.

7. The method of Claim 1, further comprising:
adapting SDH signal received into an STM-17 bus based on the system clock signal and the frame header indication signal to generate an STM-17 bus signal after synchronizing the SDH signal received with a system clock and a frame header;
cross-connecting the STM-17 bus signal at a uniform level of an STM rate; and
restoring the cross-connected STM-17 bus signal to the SDH signal based on the system clock signal and the frame header indication signal, and sending the SDH signal.

8. A system for switching an Optical Transport Network (OTN) signal using a Synchronous Digital Hierarchy (SDH), **characterized by** comprising:
a system clock unit (10) for providing a system clock signal and a frame header indication signal;
a cross-connection unit (40) for cross-connecting a signal at a uniform level of a synchronous transfer mode rate;
an OTN signal interface processing unit (30) for mapping an OTN signal received from a circuit side into at least one synchronous transfer mode -17, STM-17, bus based on the system clock signal and the frame header indication signal to generate at least one STM-17 bus signal, and sending the at least one STM-17 bus signal to the cross-connection unit; de-mapping a signal output by the cross-connection unit (40) through at least one second STM-17 bus to the OTN signal and sending the OTN signal to the circuit side;
wherein the STM-17 bus includes 9 rows and 4590 columns, the bus rate of the STM-17 bus is 2.6435 Gbps.

9. The system of Claim 8, further comprising: an SDH signal interface processing unit (20) for
synchronizing, based on the system clock signal and the frame header indication signal, an SDH signal received from the circuit side with a system clock and a frame header,
adapting the synchronized SDH signal into at least one third STM-17 bus to generate at least one second STM-17 bus signal;
sending the at least one second STM-17 bus signal to the cross-connection unit, and
restoring a signal output by the cross-connection unit through at least one fourth STM-17 bus to the SDH signal and sending the SDH signal to the circuit side.

10. The system of Claim 9, wherein the SDH signal interface processing unit (20) comprises:
an SDH signal processing module (21), for synchronizing the SDH signal received from the circuit side with the system clock and performing conversion between a signal of a standard five-level transport frame interface bus and the SDH signal received from the circuit side;
a bus adaptation module (22), connected to the SDH signal processing module (21) through the standard five-level transport frame interface bus, for performing the adaptation between the standard five-level transport frame interface bus and the synchronous transfer mode bus.

11. The system of Claim 8, wherein the OTN signal interface processing unit (30) comprises:
an OTN signal processing module (31), for performing conversion between an Optical channel Transport Unit (OTU) signal and an Optical channel Data Unit (ODU) signal; and
an ODU mapping and bus adaptation module (32), connected with the OTN signal processing module (31) through a standard five-level transport frame interface bus, for mapping the ODU signal received from the OTN signal processing module (31) to the at least one STM-17 bus signal by clock synchronization and frame synchronization alignment; de-mapping the signal through the at least one second STM-17 bus into the ODU signal and sending the ODU signal to the OTN signal processing unit (32).

12. The system of Claim 8, wherein the OTN signal interface processing unit (31) comprises:
an OTN signal processing module, for performing conversion between an OTU signal and an SDH signal;
an ODU mapping and bus adaptation module (32), connected with the OTN signal processing module (31) through a standard five-level transport frame interface bus, for adapting an SDH signal received from the OTN signal processing module (31) to the at least one STM-17 bus signal, or converting the signal through the at least one second STM-17 bus into the SDH signal and sending the SDH signal to the OTN signal processing module (31).

13. The system of Claim 11, wherein the ODU mapping and bus adaptation module (32) is further configured for mapping the ODU signal into a Virtual Container 4 of the SDH asynchronously, the Virtual Container 4 containing an ODU pointer in a fixed position pointing to the start position of the ODU signal and positive/negative adjustment bytes for adjusting the difference between a circuit clock of the ODU signal and a system clock.

14. The system of Claim 9, wherein a minimum unit to be switched is a signal of a Virtual Container level when the cross-connection unit processes traffic of the SDH signal interface processing unit (20); and
the cross-connection unit (40) cross-connects an ODU service together when processing a service of the OTN signal interface processing unit (30).

15. The system of Claim 8, wherein the cross-connection unit (40) is further configured for monitoring the at least one STM-17 signal and implementing overhead regeneration.

16. The system of Claim 8, wherein the cross-connection unit (40) switches to a backup cross-connection unit at an overhead position of the at least one STM-17 bus.

17. The system of any of Claims 8-16, wherein the OTN signal interface processing unit is operable for at least one of:
mapping an ODU1 signal into 1 STM-17 bus;
mapping an ODU2 signal into 4 STM-17 buses; and
mapping an ODU3 signal into 16 STM-17 buses.

18. An Optical Transport Network (OTN) signal interface processing unit (30), **characterized by** comprising:
a component for mapping (32), based on a system clock signal and a frame header indication signal provided by a system clock unit (10), an OTN signal received from a circuit side into at least one synchronous transfer mode -17, STM-17, bus to be sent to the cross-connection unit (40); and
a component for de-mapping (32) at least one STM-17 bus signal to the OTN signal and sending the OTN signal to the circuit side (32);
wherein the STM-17 bus includes 9 rows and 4590 columns, the bus rate of the STM-17 bus is 2.6435 Gbps.

19. A Synchronous Digital Hierarchy (SDH) signal interface processing unit (20), **characterized by** comprising:
a component for synchronizing, based on a system clock signal and a frame header indication signal provided by a system clock unit (10), an SDH signal received from a circuit side with a system clock and a frame header,
a component (22) for adapting the synchronized SDH signal into at least one synchronous transfer mode -17, STM-17, bus to generate at least one STM-17 bus signal and sending the at least one STM-17 bus signal; and
a component for restoring (22) the at least one STM-17 bus signal to the SDH signal and sending the SDH signal to the circuit side;
wherein the STM-17 bus includes 9 rows and 4590 columns, the bus rate of the STM-17 bus is 2.6435 Gbps.

## Patentansprüche

1. Verfahren zum Vermitteln eines "Optical Transport Network"-Signals (OTN-Signals) unter Verwendung einer "Synchronous Digital Hierarchy" (SDH), **dadurch gekennzeichnet, dass** es Folgendes umfasst:
"Mapping", durch ein Vermittlungssystem, eines von einer ersten OTN-Schnittstelle empfangenen OTN-Signals in mindestens einem "Synchronous Transfer Mode"-17-Bus, STM-17-Bus, auf der Basis eines Systemtaktsignals und eines durch eine Systemtakteinheit (10) bereitgestellten Frame-Header-Anzeigesignals zum Generieren mindestens eines STM-17-Bussignals (100);
Querverbinden des mindestens eines STM-17-Bussignals auf einem gleichförmigen Pegel einer STM-Rate (400) und
"De-Mapping", durch das Vermittlungssystem, des mindestens einen querverbundenen STM-17-Bussignals auf dem OTN-Signal und Senden des OTN-Signals durch eine zweite OTN-Schnittstelle (600);
wobei der STM-17-Bus 9 Zeilen und 4590 Spalten enthält, wobei die Busrate des STM-17-Busses 2,6435 Gbps beträgt.

2. Verfahren nach Anspruch 1, wobei das empfangene OTN-Signal ein "Optical Channel Transport Unit"-Signal (OTU-Signal) ist und
das "Mapping" des empfangenen OTN-Signals in dem mindestens einen STM-17-Bus Folgendes umfasst:
"De-Mapping" des empfangenen OTU-Signals auf einem "Optical Channel Data Unit"-Signal (ODU-Signal) und "Mapping" des ODU-Signals in dem mindestens einen STM-17-Bus asynchron auf der Basis des Systemtaktsignals und des "Frame-Header"-Anzeigesignals;
das "De-Mapping" des mindestens einen querverbundenen STM-17-Bussignals auf dem OTN-Signal und Senden des OTN-Signals Folgendes umfasst:
"De-Mapping" des mindestens einen querverbundenen STM-17-Bussignals auf dem ODU-Signal auf der Basis des Systemtaktsignals und des Frame-Header-Anzeigesignals und "Mapping" des ODU-Signals in das OTU-Signal und Senden des OTU-Signals.

3. Verfahren nach Anspruch 2, wobei das "Mapping" des ODU-Signals in dem mindestens einen STM-17-Bus auf der Basis des Systemtaktsignals und des "Frame-Header"-Anzeigesignals Folgendes umfasst:
"Mapping" des ODU-Signals in "Virtual Containers" (VC) des mindestens einen STM-17 und Addieren, zu einer festen Position jedes VC, eines Zeigers, der auf die Startposition des ODU-Signals zeigt, und positiver/negativer Justierungsbytes zum Justieren der Differenz zwischen einem Schaltungstakt des ODU-Signals und dem Systemtakt.

4. Verfahren nach Anspruch 1, wobei das OTN-Signal ein "Optical Channel Transport Unit"-Signal (OTU-Signal) ist und
das "Mapping" des empfangenen OTN-Signals in dem mindestens einen STM-17-Bus Folgendes umfasst:
"De-Mapping" des empfangenen OTU-Signals in ein SDH-Signal und Adaptieren des SDH-Signals in dem mindestens einen STM-17-Bus auf der Basis des Systemtaktsignals und des "Frame-Header"-Anzeigesignals; und
das "De-Mapping" des mindestens einen querverbundenen STM-17-Bussignals auf dem OTN-Signal und Senden des OTN-Signals Folgendes umfasst:
Wiederherstellen des mindestens einen querverbundenen STM-17-Bussignals zu dem SDH-Signal auf der Basis des Systemtaktsignals, "Mapping" des SDH-Signals in das OTU-Signal und Senden des OTU-Signals.

5. Verfahren nach einem der Ansprüche 1 bis 4, wobei der gleichförmige Pegel einer STM-Rate STM-1-Pegel oder VC-4-Pegel ist und das Querverbinden Folgendes umfasst: Demultiplexen des STM-17-Bussignals zu 17 STM-1-Signalen oder 17-VC-4-Signalen und Querverbinden der STM-1-Signale und VC-4-Signale, die durch "Mapping" eines OTN-Signals erfasst wurden, miteinander als eine zu vermittelnde Mindesteinheit.

6. Verfahren nach einem der Ansprüche 1 bis 4, wobei das "Mapping" eines empfangenen OTN-Signals in mindestens einem STM-17-Bus mindestens eines der Folgenden umfasst:
"Mapping" eines ODU1-Signals in 1 STM-17-Bus;
"Mapping" eines ODU2-Signals in 4 STM-17-Busse und
"Mapping" eines ODU3-Signals in 16 STM-17-Busse.

7. Verfahren nach Anspruch 1, das weiterhin Folgendes umfasst:
Adaptieren eines empfangenen SDH-Signals in einen STM-17-Bus auf der Basis des Systemtaktsignals und des "Frame-Header"-Anzeigesignals zum Generieren eines STM-17-Bussignals nach dem Synchronisieren des empfangenen SDH-Signals mit einem Systemtakt und einem "Frame-Header";
Querverbinden des STM-17-Bussignals auf einem gleichförmigen Pegel einer STM-Rate und
Wiederherstellen des querverbundenen STM-17-Bussignals zu dem SDH-Signal auf der Basis des Systemtaktsignals und des "Frame-Header"-Anzeigesignals und Senden des SDH-Signals.

8. System zum Vermitteln eines "Optical Transport Network"-Signals (OTN-Signals) unter Verwendung einer "Synchronous Digial Hierarchy" (SDH), **dadurch gekennzeichnet, dass** es Folgendes umfasst:
eine Systemtakteinheit (10) zum Liefern eines Systemtaktsignals und eines "Frame-Header"-Anzeigesignals;
eine Querverbindungseinheit (40) zum Querverbinden eines Signals auf einem gleichförmigen Pegel einer Synchronous Transfer Mode-Rate;
eine OTN-Signalschnittstellenverarbeitungseinheit (30) für das "Mapping" eines von einer Leitungsseite empfangenen OTN-Signals in mindestens einem "Synchronous Transfer Mode"-17-Bus, STM-17-Bus, auf der Basis des Systemtaktsignals und des "Frame-Header"-Anzeigesignals zum Generieren mindestens eines STM-17-Bussignals, und Senden des mindestens einen STM-17-Bussignals zu der Querverbindungseinheit; "De-Mapping" einer Signalausgabe durch die Querverbindungseinheit (40) durch mindestens einen zweiten STM-17-Bus auf das OTN-Signal und Senden des OTN-Signals zur Leitungsseite;
wobei der STM-17-Bus 9 Zeilen und 4590 Spalten enthält, wobei die Busrate des STM-17-Busses 2,6435 Gbps beträgt.

9. System nach Anspruch 8, das weiterhin Folgendes umfasst: eine SDH-Signalschnittstellenverarbeitungseinheit (20) zum:
Synchronisieren, auf der Basis des Systemtaktsignals und des "Frame-Header"-Anzeigesignals, eines von der Leitungsseite empfangenen SDH-Signals mit einem Systemtakt und einem "Frame-Header",
Adaptieren des synchronisierten SDH-Signals in mindestens einen dritten STM-17-Bus zum Generieren mindestens eines zweiten STM-17-Bussignals;
Senden des mindestens einen zweiten STM-17-Bussignals zu der Querverbindungseinheit und
Wiederherstellen einer Signalausgabe durch die Querverbindungseinheit durch mindestens einen vierten STM-17-Bus zu dem SDH-Signal und Senden des SDH-Signals zur Leitungsseite.

10. System nach Anspruch 9, wobei die SDH-Signalschnittstellenverarbeitungseinheit (20) Folgendes umfasst:
ein SDH-Signalverarbeitungsmodul (21) zum Synchronisieren des von der Leitungsseite empfangenen SDH-Signals mit dem Systemtakt und Durchführen einer Umwandlung zwischen einem Signal eines standardmäßigen Fünf-Pegel-Transportrahmenschnittstellenbusses und dem von der Leitungsseite empfangenen SDH-Signal;
ein Busadaptionsmodul (22), mit dem SDH-Signalverarbeitungsmodul (21) durch den standardmäßigen Fünf-Pegel-Transportrahmenschnittstellenbus verbunden, zum Durchführen der Adaptation zwischen dem standardmäßigen Fünf-Pegel-Transportrahmenschnittstellenbus und dem "Synchronous Transfer Mode"-Bus.

11. System nach Anspruch 8, wobei die OTN-Signalschnittstellenverarbeitungseinheit (30) Folgendes umfasst:
ein OTN-Signalverarbeitungsmodul (31) zum Durchführen einer Umwandlung zwischen einem "Optical Channel Transport Unit"-Signal (OTU-Signal) und einem "Optical Channel Data Unit"-Signal (ODU-Signal) und
ein ODU-"Mapping"- und Busadaptationsmodul (32), mit dem OTN-Signalverarbeitungsmodul (31) durch einen standardmäßigen Fünf-Pegel-Transportrahmenschnittstellenbus verbunden, für das "Mapping" des von dem OTN-Signalverarbeitungsmodul (31) empfangenen ODU-Signals zu dem mindestens einen STM-17-Bussignal durch eine Taktsynchronisation und Rahmensynchronisationsausrichtung; "De-Mapping" des Signals durch den mindestens einen zweiten STM-17-Bus in das ODU-Signal und Senden des ODU-Signals zu der OTN-Signalverarbeitungseinheit (32).

12. System nach Anspruch 8, wobei die OTN-Signalschnittstellenverarbeitungseinheit (31) Folgendes umfasst:
ein OTN-Signalverarbeitungsmodul zum Durchführen einer Umwandlung zwischen einem OTU-Signal und einem SDH-Signal;
ein ODU-"Mapping"- und Busadaptationsmodul (32), mit dem OTN-Signalverarbeitungsmodul (31) durch einen standardmäßigen Fünf-Pegel-Transportrahmenschnittstellenbus verbunden, zum Adaptieren eines von dem OTN-Signalverarbeitungsmodul (31) empfangenen SDH-Signals zu dem mindestens einen STM-17-Bussignal oder Umwandeln des Signals durch den mindestens einen zweiten STM-17-Bus in das SDH-Signal und Senden des SDH-Signals zu dem OTN-Signalverarbeitungsmodul (31).

13. System nach Anspruch 11, wobei das ODU-"Mapping"- und Busadaptationsmodul (32) weiterhin konfiguriert ist für das asynchrone "Mapping" des ODU-Signals in einem "Virtual Container" 4 des SDH, wobei der "Virtual Container" 4 einen ODU-Zeiger in einer festen Position enthält, der zur Startposition des OCU-Signals zeigt, und positive/negative Justierungsbytes zum Justieren der Differenz zwischen einem Schaltungstakt des ODU-Signals und einem Systemtakt.

14. System nach Anspruch 9, wobei eine zu vermittelnde Mindesteinheit ein Signal eines "Virtual-Container"-Pegels ist, wenn die Querverbindungseinheit Verkehr der SDH-Signalschnittstellenverarbeitungseinheit (20) verarbeitet; und
die Querverbindungseinheit (40) einen ODU-Dienst miteinander verbindet, wenn ein Dienst der OTN-Signalschnittstellenverarbeitungseinheit (30) verarbeitet wird.

15. System nach Anspruch 8, wobei die Querverbindungseinheit (40) weiterhin konfiguriert ist zum Überwachen des mindestens einen STM-17-Signals und Implementieren einer "Overhead"-Regenerierung.

16. System nach Anspruch 8, wobei die Querverbindungseinheit (40) zu einer Backup-Querverbindungseinheit an einer "Overhead"-Position des mindestens eines STM-17-Busses vermittelt.

17. System nach einem der Ansprüche 8-16, wobei die OTN-Signalschnittstellenverarbeitungseinheit für mindestens eines der Folgenden betätigt werden kann:
"Mapping" eines ODU1-Signals in 1 STM-17-Bus;
"Mapping" eines ODU2-Signals in 4 STM-17-Busse und
"Mapping" eines ODU3-Signals in 16 STM-17-Busse.

18. Optical Transport Network- (OTN) Signalschnittstellenverarbeitungseinheit (30), **dadurch gekennzeichnet, dass** sie Folgendes umfasst:
eine Komponente für das "Mapping" (32), auf der Basis eines Systemtaktsignals und eines "Frame-Header"-Anzeigesignals, die von einer Systemtakteinheit (10) bereitgestellt wurden, eines von einer Leitungsseite empfangenen OTN-Signals in mindestens einem "Synchronous Transfer Mode"-17-Bus, STM-17-Bus, zum Senden zur Querverbindungseinheit (40); und
eine Komponente für das "De-Mapping" (32) mindestens eines STM-17-Bussignals auf OTN-Signal und Senden des OTN-Signals zur Leitungsseite (32);
wobei der STM-17-Bus 9 Zeilen und 4590 Spalten enthält, wobei die Busrate des STM-17-Busses 2,6435 Gbps beträgt.

19. "Synchronous Digital Hierarchy"- (SDH) Signalschnittstellenverarbeitungseinheit (20), **dadurch gekennzeichnet, dass** sie Folgendes umfasst:
eine Komponente zum Synchronisieren, auf der Basis eines Systemtaktsignals und eines "Frame-Header"-Anzeigesignals, die durch eine Systemtakteinheit (10) bereitgestellt wurden, eines von einer Leitungsseite empfangenen SDH-Signals mit einem Systemtakt und einem "Frame-Header",
eine Komponente (22) zum Adaptieren des synchronisierten SDH-Signals in mindestens einen "Synchronous Transfer Mode"-17-Bus, STM-17-Bus, zum Generieren mindestens eines STM-17-Bussignals und Senden des mindestens eines STM-17-Bussignals; und
eine Komponente zum Wiederherstellen (22) des mindestens einen STM-17-Bussignals zu dem SDH-Signal und Senden des SDH-Signals zur Leitungsseite;
wobei der STM-17-Bus 9 Zeilen und 4590 Spalten enthält, wobei die Busrate des STM-17-Busses 2,6435 Gbps beträgt.

## Revendications

1. Procédé pour commuter un signal de réseau de transport optique (OTN) au moyen d'une hiérarchie numérique synchrone (SDH), **caractérisé en ce qu'**il comprend les étapes suivantes :
mapper, par l'intermédiaire d'un système de commutation, un signal OTN reçu depuis une première interface OTN dans au moins un bus en mode de transfert synchrone-17, STM-17, sur la base d'un signal d'horloge de système et d'un signal indicateur d'en-tête de trame, délivré par une unité d'horloge de système (10), pour générer au moins un signal de bus STM-17 (200) ;
interconnecter l'au moins un signal de bus STM-17 à un niveau uniforme d'un débit STM (400) ; et
démapper, par l'intermédiaire du système de commutation, l'au moins un signal de bus STM-17 interconnecté du signal OTN et envoyer le signal OTN à travers une seconde interface OTN (600) ;
où le bus STM-17 comprend 9 rangées et 4590 colonnes, le débit de bus du bus STM-17 étant de 2,6435 Gbps.

2. Procédé selon la revendication 1, dans lequel le signal OTN reçu est un signal d'unité de transport de canal optique (OTU) ; et
le mappage du signal OTN reçu dans l'au moins un bus STM-17 comprend les étapes suivantes :
démapper le signal OTU reçu du signal d'unité de données de canal optique (ODU), et mapper le signal ODU dans l'au moins un bus STM-17 de manière asynchrone sur la base du signal d'horloge de système et du signal indicateur d'en-tête de trame ;
le démappage de l'au moins un signal de bus STM-17 interconnecté en le signal OTN et l'envoi du signal OTN comprennent les étapes suivantes :
démapper l'au moins un signal de bus STM-17 interconnecté en le signal ODU sur la base du signal d'horloge de système et du signal indicateur d'en-tête de trame, et mapper le signal ODU dans le signal OTU et envoyer le signal OTU.

3. Procédé selon la revendication 2, dans lequel le mappage du signal ODU dans l'au moins un bus STM-17 sur la base du signal d'horloge de système et du signal indicateur d'en-tête de trame, comprend les étapes suivantes :
mapper le signal ODU dans des conteneurs virtuels (VC) de l'au moins un STM-17, et ajouter, à une position fixe de chaque VC, un pointeur pointant vers la position de départ du signal ODU et des octets d'ajustement positif/négatif pour ajuster la différence entre une horloge de circuit du signal ODU et l'horloge de système.

4. Procédé selon la revendication 1, dans lequel le signal OTN est un signal d'unité de transport de canal optique (OTU) ; et
le mappage du signal OTN reçu dans l'au moins un bus STM-17 comprend les étapes suivantes :
démapper le signal OTU reçu en un signal SDH, et adapter le signal SDH dans l'au moins un bus STM-17 sur la base du signal d'horloge de système et du signal indicateur d'en-tête de trame ; et
le démappage de l'au moins un signal de bus STM-17 interconnecté en le signal OTN et l'envoi du signal OTN comprennent les étapes suivantes :
restaurer l'au moins un signal de bus STM-17 interconnecté en le signal SDH sur la base du signal d'horloge de système, mapper le signal SDH dans le signal OTU et envoyer le signal OTU.

5. Procédé selon l'une quelconque des revendications 1 à 4, dans lequel le niveau uniforme d'un débit STM est un niveau STM-1 ou un niveau VC-4, et l'interconnexion comprend les étapes suivantes : démultiplexer le signal de bus STM-17 en 17 signaux STM-1 ou en 17 signaux VC-4, et interconnecter ensemble les signaux STM-1 ou les signaux VC-4, acquis par mappage d'un signal OTN comme unité minimum à commuter.

6. Procédé selon l'une quelconque des revendications 1 à 4, dans lequel le mappage d'un signal OTN reçu dans au moins un bus STM-17 comprend au moins une des étapes suivantes :
mapper un signal ODU1 dans 1 bus STM-17
mapper un signal ODU2 dans 4 bus STM-17 ; et
mapper un signal ODU3 dans 16 bus STM-17.

7. Procédé selon la revendication 1, comprenant en outre les étapes suivantes :
adapter un signal SDH reçu dans un bus STM-17 sur la base du signal d'horloge de système et du signal indicateur d'en-tête de trame pour générer un signal de bus STM-17 après synchronisation du signal SDH reçu avec une horloge de système et un en-tête de trame ;
interconnecter le signal de bus STM-17 à un niveau uniforme d'un débit STM ; et
restaurer le signal de bus STM-17 interconnecté au niveau du signal SDH sur la base du signal d'horloge de système et du signal indicateur d'en-tête de trame, et envoyer le signal SDH.

8. Système pour commuter un signal de réseau de transport optique (OTN) au moyen d'une hiérarchie numérique synchrone (SDH), **caractérisé en ce qu'**il comprend :
une unité d'horloge de système (10) pour délivrer un signal d'horloge de système et un signal indicateur d'en-tête de trame ;
une unité d'interconnexion (40) pour interconnecter un signal à un niveau uniforme d'un débit de mode de transfert synchrone ;
une unité de traitement d'interface de signal OTN (30) pour mapper un signal OTN reçu d'un côté circuit dans au moins un bus en mode de transfert synchrone-17, STM-17, sur la base du signal d'horloge de système et du signal indicateur d'en-tête de trame pour générer au moins un signal de bus STM-17, et envoyer l'au moins un signal de bus STM-17 à l'unité d'interconnexion ; démapper une sortie de signal par l'intermédiaire de l'unité d'interconnexion (40) à travers au moins un second bus STM-17 en le signal OTN et envoyer le signal OTN côté circuit ;
où le bus STM-17 comprend 9 rangées et 4590 colonnes, le débit de bus du bus STM-17 étant de 2,6435 Gbps.

9. Système selon la revendication 8, comprenant en outre : une unité de traitement d'interface de signal SDH (20) pour
synchroniser, sur la base du signal d'horloge de système et du signal indicateur d'en-tête de trame, un signal SDH reçu depuis le côté circuit avec une horloge de système et un en-tête de trame ;
adapter le signal SDH synchronisé à au moins un troisième bus STM-17 pour générer au moins un second signal de bus STM-17 ;
envoyer l'au moins un second signal de bus STM-17 à l'unité d'interconnexion, et
restaurer une sortie de signal par l'intermédiaire de l'unité d'interconnexion à travers au moins un quatrième bus STM-17 en le signal SDH et envoyer le signal SDH côté circuit.

10. Système selon la revendication 9, dans lequel l'unité de traitement d'interface de signal SDH (20) comprend :
un module de traitement de signal SDH (21), pour synchroniser le signal SDH reçu depuis le côté circuit avec l'horloge de système et exécuter une conversion entre un signal d'un bus d'interface de trame de transport à cinq niveaux standard et le signal SDH reçu depuis le côté circuit ;
un module d'adaptation de bus (22), connecté au module de traitement de signal SDH (21) à travers le bus d'interface de trame de transport à cinq niveaux standard, pour exécuter l'adaptation entre le bus d'interface de trame de transport à cinq niveaux standard et le bus en mode de transfert synchrone.

11. Système selon la revendication 8, dans lequel l'unité de traitement d'interface de signal OTN (30) comprend :
un module de traitement de signal OTN (31), pour exécuter une conversion entre un signal d'unité de transport de canal optique (OTU) et un signal d'unité de données de canal optique (ODU) ; et
un module d'adaptation de bus et de mappage ODU (32), connecté avec le module de traitement de signal OTN (31) à travers un bus d'interface de trame de transport à cinq niveaux standard, pour mapper le signal ODU reçu depuis le module de traitement de signal OTN (31) à l'au moins un signal de bus STM-17 par l'intermédiaire d'une synchronisation d'horloge et d'un alignement de synchronisation de trame ; démapper le signal à travers l'au moins un second bus STM-17 en le signal ODU et envoyer le signal ODU à l'unité de traitement de signal OTN (32).

12. Système selon la revendication 8, dans lequel l'unité de traitement d'interface de signal OTN (31) comprend :
un module de traitement de signal OTN, pour exécuter une conversion entre un signal OTU et un signal SDH ;
un module d'adaptation de bus et de mappage ODU (32), connecté avec le module de traitement de signal OTN (31) à travers un bus d'interface de trame de transport à cinq niveaux standard, pour adapter un signal SDH reçu du module de traitement de signal OTN (31) à l'au moins un signal de bus STM-17, ou convertir le signal à travers l'au moins un second bus STM-17 en le signal SDH et envoyer le signal SDH au module de traitement de signal OTN (31).

13. Système selon la revendication 11, dans lequel le module d'adaptation de bus et de mappage ODU (32) est en outre configuré pour mapper le signal ODU dans un conteneur virtuel 4 de la SDH de manière asynchrone, le conteneur virtuel 4 contenant un pointeur ODU dans une position fixe pointant vers la position de départ du signal ODU et des octets d'ajustement positif/négatif pour ajuster la différence entre une horloge de circuit du signal ODU et une horloge de système.

14. Système selon la revendication 9, dans lequel une unité minimum à commuter est un signal d'un niveau de conteneur virtuel lorsque l'unité d'interconnexion traite un trafic de l'unité de traitement d'interface de signal SDH (20) ; et
l'unité d'interconnexion (40) interconnecte un service ODU lors du traitement d'un service de l'unité de traitement d'interface de signal OTN (30).

15. Système selon la revendication 8, dans lequel l'unité d'interconnexion (40) est en outre configurée pour surveiller l'au moins un signal STM-17 et mettre en oeuvre une régénération de surdébit.

16. Système selon la revendication 8, dans lequel l'unité d'interconnexion (40) commute vers une unité d'interconnexion de sauvegarde dans une position de surdébit de l'au moins un bus STM-17.

17. Système selon l'une quelconque des revendications 8 à 16, dans lequel l'unité de traitement d'interface de signal OTN est utilisable pour au moins l'une des étapes suivantes :
mapper un signal ODU1 dans 1 bus STM-17
mapper un signal ODU2 dans 4 bus STM-17 ; et
mapper un signal ODU3 dans 16 bus STM-17.

18. Unité de traitement d'interface de signal de réseau de transport optique, OTN, (30) **caractérisée en ce qu'**elle comprend :
un composant pour mapper (32), sur la base d'un signal d'horloge de système et d'un signal indicateur d'en-tête de trame, délivré par une unité d'horloge de système (10), un signal OTN reçu depuis un côté circuit dans au moins un bus en mode de transfert synchrone -17, STM-17, à envoyer à l'unité d'interconnexion (40) ; et
un composant pour démapper (32), au moins un signal de bus STM-17 en le signal OTN et envoyer le signal OTN côté circuit (32) ;
où le bus STM-17 comprend 9 rangées et 4590 colonnes, le débit de bus du bus STM-17 étant de 2,6435 Gbps.

19. Unité de traitement d'interface de signal de hiérarchie numérique synchrone (SDH) (20), **caractérisée en ce qu'**elle comprend :
un composant pour synchroniser, sur la base d'un signal d'horloge de système et d'un signal indicateur d'en-tête de trame, délivré par une unité d'horloge de système (10), un signal SDH reçu depuis un côté circuit avec une horloge de système et un en-tête de trame,
un composant (22) pour adapter le signal SDH synchronisé à l'au moins un bus en mode de transfert synchrone-17, STM-17, pour générer au moins un signal de bus STM-17 et envoyer l'au moins un signal de bus STM-17 ; et
un composant pour restaurer (22) l'au moins un signal de bus STM-17 en le signal SDH et envoyer le signal SDH côté circuit ;
où le bus STM-17 comprend 9 rangées et 4590 colonnes, le débit de bus du bus STM-17 étant de 2,6435 Gbps.
